# EUROPÄISCHE PATENTANMELDUNG

(11) **EP 0 528 388 A1**
(43) Veröffentlichungstag der Anmeldung: **24.02.1993**
(21) Anmeldenummer: 92113936.6
(22) Anmeldetag: 15.08.1992
(51) Int. Cl.: B60R 13/10

(54) **Halterung für die diebstahlsichere Befestigung eines Zeichenschildes**

(30) Priorität: 17.08.1991 DE 4127285
(71) Anmelder: Lisson, Hugo, D-61279 Grävenwiesbach (DE)
(72) Erfinder: Lisson, Hugo, D-61279 Grävenwiesbach (DE)
(74) Vertreter: Jochem, Bernd, Dipl.-Wirtsch.-Ing.

(57) **Zusammenfassung**

Eine Halterung zur diebstahlsicheren Befestigung eines Zeichenschildes (14), insbesondere eines Kfz-Kennzeichenschildes, enthält wenigstens zwei Halteblechelemente (10, 18, 20) mit Randfassungen (16), welche die Ränder des Zeichenschildes (14) allseitig umfassen. Im montierten Zustand überdeckt das Zeichenschild (14) überdimensionierte Köpfe von Befestigungsschrauben (22), welche ein Halteblechelement (10, 18) mit einer Befestigungsfläche (24) verbinden. Außerdem werden durch das Zeichenschild Rastglieder (32) überdeckt, die beim Zusammenschieben der Halteblechelemente (10, 18, 20) in Eingriff auch mit dem Karosserieblech (24) und/oder einem darauf befestigten Blech gebracht werden.

## Beschreibung

Die Erfindung betrifft eine Halterung zur diebstahlsicheren Befestigung eines flächigen Zeichenschildes, insbesondere eines Kfz-Kennzeichenschildes, auf einer Befestigungsfläche, bestehend aus Halteblechelementen mit Randfassungen, welche die Ränder des Zeichenschildes im montierten Zustand allseitig umfassen, wobei ein erstes Halteblechelement durch lösbare Befestigungselemente mit Kopf auf der Befestigungsfläche festlegbar ist, wenigstens ein weiteres Halteblechelement durch zusammenwirkende Rastglieder mit dem ersten Halteblechelement in Eingriff zu bringen ist und sowohl die Befestigungselemente als auch die Rastglieder im fertig montierten Zustand vom Zeichenschild überdeckt sind.

Der Diebstahl von Zeichenschildern stellt seit jeher ein ernstzunehmens Problem dar, und dies vor allem dann, wenn sich die Zeichenschilder auch mißbräuchlich verwenden lassen. Vornehmlich betroffen sind in dieser Hinsicht der Identifikation eines einzelnen Gegenstandes, wie etwa eines Kfz, dienende Kennzeichenschilder.

Vor allem von seiten der Ordnungs- und Polizeibehörden wird bereits seit langem gefordert, daß an Kfz angebrachte Kennzeichenschilder besser gegen Diebstahl gesichert sein sollten, um deren mißbräuchliche Benutzung und damit verbundene Straftaten zu erschweren. Ein sicherer Schutz der Kfz-Kennzeichenschilder vor Diebstahl und Mißbrauch ist dann gegeben, wenn die Entfernung von einmal am Kfz befestigten Kennzeichenschildern gleichzeitig deren Zerstörung erzwingt. Andererseits muß ein Auswechseln des Zeichenschildes ohne Schwierigkeiten und ohne Beschädigung der Halterung möglich sein. Außerdem sollen sich in vielen Fällen die Zeichenschilder samt ihrer Halterung in einer sie aufnehmenden, nur wenig größeren Vertiefung, z. B. einer Fahrzeugkarosserie, montieren lassen.

Eine bekannte Konstruktion der eingangs genannten Art gemäß DE-A1-23 06 782 sieht ein an einer Karosserie befestigbares, mittleres, längliches Halteblechelement mit einer oberen und unteren Randfassung sowie wenigstens ein weiteres, als seitliches Endteil dienendes Halteblechelement vor, das mit einem Vorsprung zwischen das Zeichenschild und das mittlere Halteblechelement einzuschieben und mit diesem durch Rastglieder in Eingriff zu bringen und ggf. zur weiteren Erhöhung der Sicherheit durch einen von unten einzusetzenden Niet fest zu verbinden ist. Nachteilig ist dabei, daß eine das Zeichenschild aufnehmende Vertiefung in der Karosserie etwa doppelt so lang sein muß wie dieses und nur dann, wenn von hinten ein Niet eingesetzt wird, die Rastglieder zuverlässig in Eingriff gehalten werden, weil das labile Zeichenschild selbst, welches normalerweise ein Aluminiumblech ist, dazu nicht in der Lage ist. Nach dem Vernieten läßt sich das Zeichenschild nicht ohne Beschädigung der Halterung demontieren. Andererseits kann die gesamte Halterung samt Zeichenschild entfernt werden, wenn nur an den Stellen, wo das mittlere Halteblechelement mit normal großen Befestigungsschrauben befestigt ist, unauffällig kleine Löcher durch das Zeichenschild gebohrt werden, die sich bei dessen späterer unbefugter Verwendung ebenso unauffällig wieder verschließen und überdecken lassen.

Für weitere bekannte Konstruktionen gemäß GB-B-1,604,189 und DE-U-77 36 365 mit durch das Zeichenschild überdeckten Rastgliedern gelten die vorstehend genannten Nachteile entsprechend.

Der Erfindung liegt daher in erster Linie die Aufgabe zugrunde, eine Halterung zur wirksameren diebstahlsicheren Befestigung eines flächigen Zeichenschildes, insbesondere eines Kfz-Kennzeichenschildes, zu schaffen, welche weiterhin eine einfache und mühelose Montage erlaubt und aus welcher das Zeichenschild nur durch seine verhältnismäßig großflächige Zerstörung, aber ohne Beschädigung der Halterung, zu entfernen ist.

Vorstehende Aufgabe wird erfindungsgemäß dadurch gelöst, daß die Schlüsselweite des Kopfes der Befestigungselemente weit überdimensioniert ist und das weitere Halteblechelement zwischen die Befestigungsfläche und das erste Halteblechelement einschiebbar und durch zusammenwirkende Rastglieder auch mit der Befestigungsfläche und/oder einem zwischen dieser und den Halteblechelementen befestigten, unteren Gleitblech in Eingriff zu bringen ist.

Da die Halterung den Rand des jeweiligen Zeichenschildes rundum eng zu umschließen hat, müssen Schild und Halterung in ihrer flächenmäßigen Größe einander angepaßt sein. Es besteht aber keine Schwierigkeit, die Halterung in der Herstellung den verschiedenen, sich jeweils in Gebrauch befindenden Schildgrößen anzupassen, da hierdurch die Konstruktion in ihrem Wesen nicht berührt wird.

Die Erfindung bietet den Vorteil, daß großflächige Befestigungselemente, mit denen die Halterung mit der Befestigungsfläche verbunden ist, nach der Montage des Zeichenschildes nicht mehr zugänglich sind, so daß das Zeichenschild auch großflächig zerstört werden muß, wenn es von der Befestigungsfläche getrennt werden soll. Außerdem wird die Sicherheit gegen Diebstahl des Zeichenschildes dadurch entscheidend verbessert und tatsächlich überhaupt erst gewährleistet, daß zweiseitig wirkende Rastglieder vorgesehen sind, welche nicht durch einseitig wirkende Druck- und Biegekräfte, wie sie bei Diebstahlversuchen auftreten, außer Eingriff gebracht werden können.

Um die Zeichenschilder besser geschützt in einer sie möglichst eng umgebenden Vertiefung, z. B. im Karosserieblech, aufnehmen zu können, ist nach einer ersten bevorzugten Ausführungsform der Erfindung vorgesehen, daß die Halteblechelemente im miteinander verbundenen Zustand zusammen eine längliche rechteckige Form mit einer sich in Längsrichtung erstreckenden Trennlinie haben. Dabei besteht die Möglichkeit, ein Zeichenschild in leicht gekrümmtem Zustand, durch den seine Länge verkürzt wird, frontal in die Halterung einzusetzen, während die inneren Kanten der sich in Längsrichtung erstreckenden Randfassungen nur wenig weiter voneinander entfernt sind, als der Höhe des Zeichenschildes entspricht.

Bei einer weiteren bevorzugten Ausführungsform der Erfindung wird die Montage in einer dem Zeichenschild angepaßten Vertiefung der Karosserie dadurch ermöglicht, daß die Halteblechelemente im miteinander verbundenen Zustand zusammen eine rechteckige Form mit einer sich zwischen diagonal gegenüberliegenden Ecken erstreckenden Trennlinie haben. Diese letztgenannte Ausführungsform kommt vor allem für mehr quadratische und/oder steifere Zeichenschilder in Frage, die sich nicht leicht von Hand biegen lassen.

Weitere Ausführungsvarianten werden nachstehend anhand der in der Zeichnung gezeigten Ausführungsbeispiele näher erläutert. Es zeigen:
- Fig. 1: eine seitliche Schnittansicht einer nur ein Gleitblech enthaltenden Halterung, mittels derer ein Kennzeichenschild auf einer Befestigungsfläche montiert ist;
- Fig. 2 und 2A: eine Draufsicht und einen senkrechten Querschnitt eines aus zwei Halteblechelementen bestehenden Halteblechs entsprechend Fig. 1,
- Fig. 3 und 3A: eine Draufsicht und einen senkrechten Querschnitt eines vorderen Gleitblechs entsprechend Fig. 1;
- Fig. 4: eine seitliche Schnittansicht einer zwei Gleitbleche enthaltenden Halterung, mittels derer ein Kennzeichenschild auf einer Befestigungsfläche montiert ist;
- Fig. 5 und 5A: eine Draufsicht und einen waagerechten Querschnitt eines aus zwei Halteblechelementen bestehenden Haltebleches entsprechend Fig. 4;
- Fig. 6: eine Draufsicht auf ein vorderes Gleitblech entsprechend Fig. 4;
- Fig. 7: eine Draufsicht auf ein hinteres Gleitblech entsprechend Fig. 4.

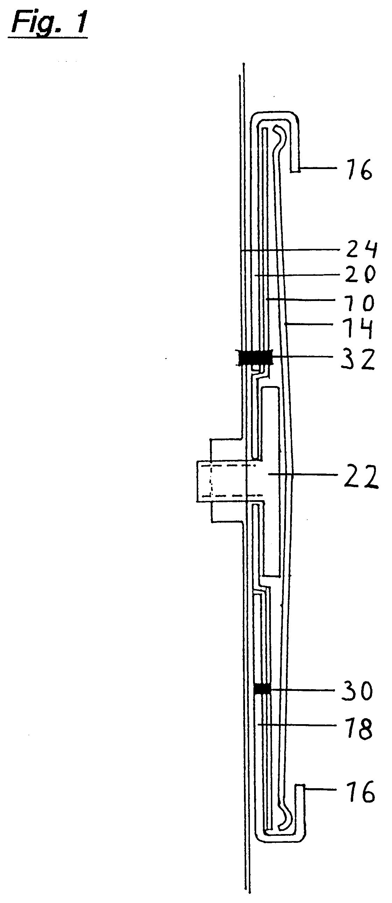

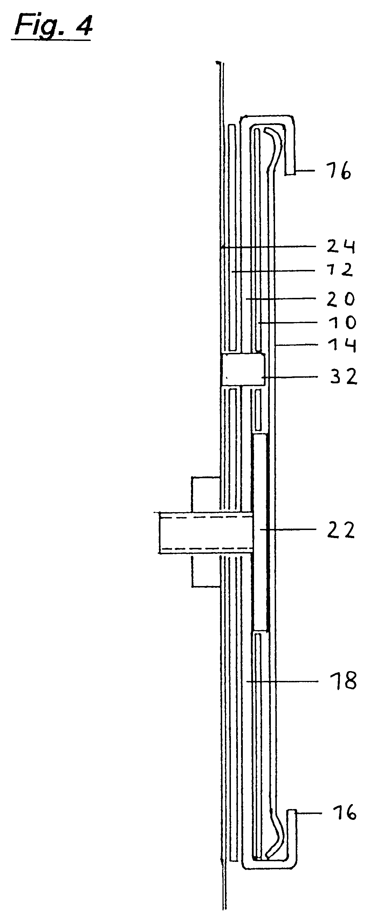

Das in den Fig. 1 bis 3A dargestellte Ausführungsbeispiel bezieht sich auf eine Zeichenschildhalterung in einfacher Ausführung, welche nur ein vorderes Gleitblech 10 enthält. Neben anderen konstruktiven Unterschieden enthält das in den Fig. 4 bis 7 dargestellte Ausführungsbeispiel ein zusätzliches hinteres Gleitblech 12.

### 1. Ausführungsbeispiel

Fig. 1 zeigt eine Halterung der einfacheren Ausführung in fertig montiertem Zustand. Das Schnittbild verdeutlicht, wie das Kennzeichenschild 14 von den Randfassungen 16 des aus einem unteren Halteblechelement 18 und einem oberen Halteblechelement 20 zusammengesetzten Haltebleches 18, 20 ca. 8 mm bzw. fingerbreit umfaßt und auf diese Weise in seiner Lage fixiert ist und wie die Befestigungsschrauben 22, über welche die Halterung mit der Befestigungsfläche 24 verbunden ist, durch das Kennzeichenschild 14 verdeckt und somit nicht mehr zugänglich sind.

Das Kernstück der Halterung bildet das das vordere Gleitblech 10 und das Kennzeichenschild 14 aufnehmende und deren Ränder mittels der Randfassungen 16 umklammernde Halteblech 18, 20. Flächengröße und Profil des Haltebleches 18, 20 ergeben sich aus seiner Zweckbestimmung, nämlich das einliegende Kennzeichenschild 14 nebst vorderem Gleitblech 10 an den Rändern eng zu umschließen, so daß die Größe des Haltebleches 18, 20 durch die Schildgröße vorgegeben ist.

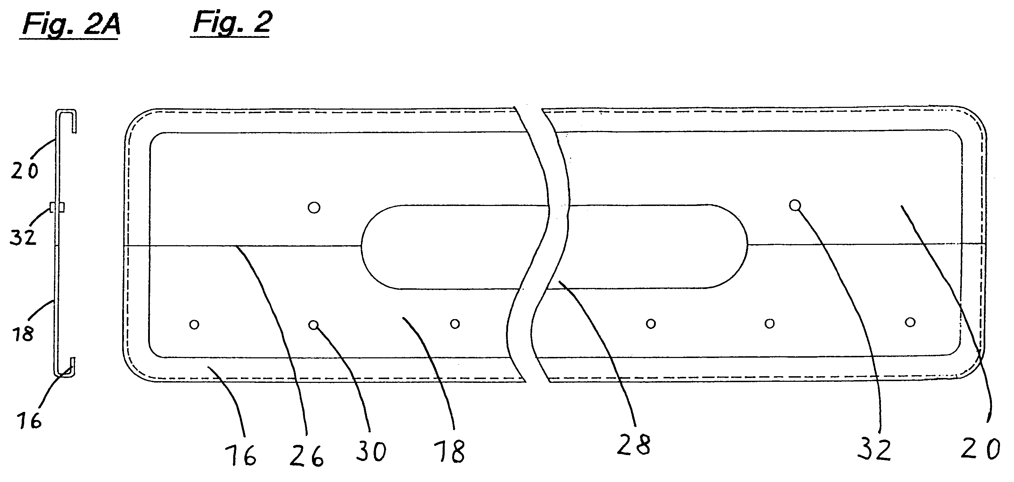

Wie aus Fig. 2 ersichtlich, ist das Halteblech 18, 20 in der vorliegenden Ausführung entlang einer waagerechten Trennlinie 26 in das obere Halteblechelement 20 und das untere Halteblechelement 18 unterteilt. Beide Halteblechelemente 18, 20 sind aus ca. 1,75 mm starkem Stahlblech gefertigt. Vorzugsweise sind die Randfassungen 16 nachträglich gehärtet, um Auffräsungen derselben zusätzlich zu erschweren. Alternativ können die Halteblechelemente auch aus sehr festem Kunststoff bestehen. Die Randfassungen 16 beider Halteblechelemente 18, 20 verlaufen rundum lückenlos um den Umfang des gesamten Haltebleches 18, 20. Beim Aneinanderlegen der beiden Halteblechelemente 18, 20 wird außerdem eine längliche Aussparung 28 mit halbkreisförmigen Enden sichtbar. Die Breite der Aussparung 28 entspricht dabei dem Durchmesser des Kopfes einer Befestigungsschraube 22. Das untere Halteblechelement 18 ist bereits vor der Montage über mehrere Niete 30 oder mittels Punktverschweißung fest mit dem vorderen Gleitblech 10 verbunden und bildet gemeinsam mit letzterem ein Teil, welches auch einstückig mit gleichem Umriß und einer sich im mittleren Bereich in Längsrichtung erstreckenden Stufe in Höhe etwa einer Blechstärke geformt sein kann und in welches das Kennzeichenschild 14 von oben hineingeschoben werden kann. Am oberen Halteblechelement 20 sind insgesamt vier zapfenförmig ausgebildete Befestigungsmittel 32 angebracht, von denen je zwei nach vorne und nach hinten hervorragen, wobei vorzugsweise, wie gezeigt, zwei durchgehende, sowohl nach vorne als auch nach hinten vorstehende Zapfen verwendet werden. Der Durchmesser der Zapfen 32 beträgt beispielsweise 5 mm bei einer einseitigen Länge von beispielsweise 3 mm. Vorzugsweise besitzen die Zapfen 32 zylinderförmige Gestalt und sind an den Enden derart kegelig und/oder abgerundet, daß einerseits ein Gleitvorgang zwischen Befestigungsfläche 24 und vorderem Gleitblech 10 stattfinden kann und andererseits das Ausbohren der Zapfen erschwert wird. Aus diesem Grunde wird auch ein gehärtetes Material für die Zapfen bevorzugt.

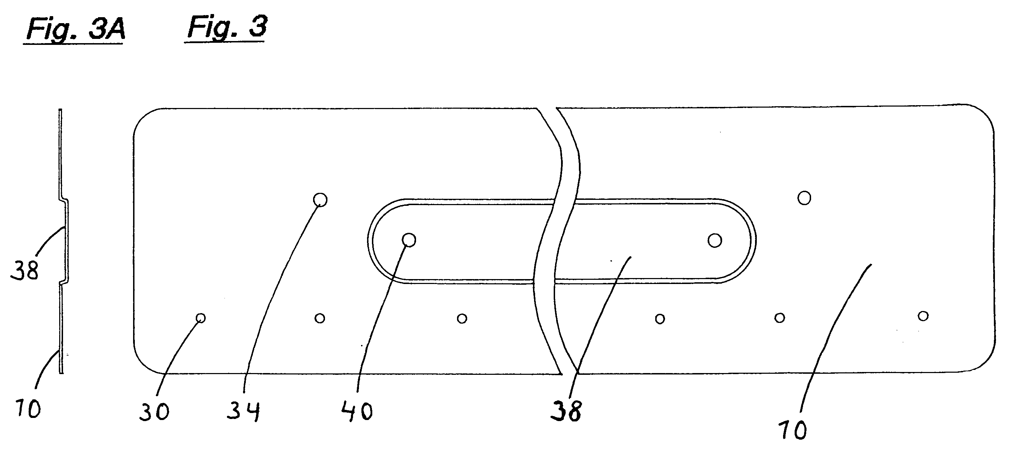

Das in Fig. 3 abgebildete vordere Gleitblech 10 besitzt eine glatte Oberfläche und kann zur Gewährleistung ausreichender Elastizität und Federkraft beispielsweise aus 1 mm starkem verzinkten Stahlblech gefertigt sein. Die Namensgebung "Gleitblech" rührt daher, daß das obere Halteblechelement 20 bei der Montage gleitend zwischen Befestigungsfläche 24 und vorderem Gleitblech 10 eingeschoben wird. Weiterhin weist das vordere Gleitblech 10 in seiner oberen Hälfte zwei Rundlöcher 34 auf, in welche die nach vorne ragenden Zapfen 32 einrastbar sind. Die beiden nach hinten ragenden Zapfen 32 sind in zwei in die Befestigungsfläche 24 resp. Karosserie oder ein darauf befestigtes unteres Gleitblech 12 (siehe Fig. 4) zu bohrende Rundlöcher 36 einrastbar. Eines davon ist in Fig. 1 sichtbar. Vordere und hintere Zapfen 32 dienen somit der unlösbaren Arretierung des oberen Halteblechelementes 20 nach Beendigung der vollständigen Kennzeichenschildmontage.

In der Draufsicht nach Fig. 3 und in den Schnittansichten nach Fig. 1 und 3A ist eine ca. 2 mm tiefe Einsenkung 38 im vorderen Gleitblech 10 erkennbar, deren Boden der bereits erwähnten Aussparung 28 im Halteblech 18, 20 formschlüssig genau angepaßt ist. Innerhalb der Einsenkung 38 sind zwei Bohrungen 40 zur Aufnahme der Befestigungsschrauben 22 vorhanden. Wie aus Fig. 1 ersichtlich, sitzen die Köpfe der beiden Befestigungsschrauben 22 im montierten Zustand teilweise in besagter Einsenkung 38.

Die Befestigungsschrauben 22 sind insofern ungewöhnlich ausgebildet, als ihr Kopf jeweils einen überdimensionierten Durchmesser in einer Größenordnung von z. B. etwa 30 mm aufweist und im Verhältnis zum Durchmesser mit ca. 4 mm sehr flach ist. Der Kopfdurchmesser beträgt dabei wenigstens das Dreifache, vorzugsweise etwa das Fünffache oder mehr des Gewindedurchmessers. In dem Kopf sind in möglichst weitem Abstand voneinander zwei Löcher zum Einstecken eines Spezialschlüssels vorhanden. Somit können die im montierten Zustand vom Kennzeichenschild 14 verdeckten Befestigungsschrauben 22 nur gelöst werden, wenn ein unübersehbarer großer Teil der Schildfläche durch zerstörerische Einwirkung vorher freigelegt worden ist. Im übrigen können die Befestigungsschrauben 22 als Metallschrauben mit einem Gewinde in der Größenordnung von M6 oder als selbstschneidende Blechtreibschrauben mit vergleichbarer Gewindegröße ausgebildet sein. Es kann auch ein Gewindezapfen fest mit der Karosserie verbunden und eine überdimensionierte Mutter als Kopf aufschraubbar sein. Die Länge der Befestigungsschrauben 22 muß ausreichend bemessen sein, um die unter der Halterung liegende Befestigungsfläche 24 zu durchdringen, bzw. in eine an der Innenseite der Befestigungsfläche 24 bzw. Karosserie aufgeschweißte Mutter 41 zu fassen. Dadurch, daß die Köpfe der Befestigungsschrauben 22 ein wenig von der Oberfläche des vorderen Gleitbleches 10 abstehen, entsteht beim montierten Kennzeichenschild 14 eine erwünschte leichte Aufwölbung, welche das in die Randfassungen 16 gepreßte Kennzeichenschild 14 zusätzlich in Spannung versetzt, wodurch ein eventuell noch vorhandenes und ansonsten Klappergeräusche verursachendes Spiel beseitigt wird.

Anschließend erfolgt eine Beschreibung des Montagevorganges, wodurch die Funktion der einzelnen Teile der Erfindung weiter veranschaulicht werden soll.

Wenn die Befestigungsschrauben 22 mit Metallgewinde ausgebildet sind, so ist die für das Kennzeichenschild 14 vorgesehene Befestigungsfläche 24 am Fahrzeug derart vorzubereiten, daß zunächst Löcher für die Aufnahme des Gewindeteiles der Befestigungsschrauben 22 in die Karosserie zu bohren und die erforderlichen Muttern 41 an der Innenseite der Befestigungsfläche 24 aufzuschweißen oder aufzukleben sind. Anstelle der Muttern 41 können auch ein Gewinde enthaltende Spezialdübel in die Bohrlöcher eingeführt werden. Sodann wird die aus dem vorderen Gleitblech 10 und dem unteren Halteblechelement 18 zusammengefügte Einheit mittels der Befestigungsschrauben 22 fest am Fahrzeug verschraubt. Anschließend werden durch die im vorderen Gleitblech 10 für die Aufnahme der am oberen Halteblechelement 20 befindlichen Zapfen 32 bereits vorgebohrten Löcher hindurch ebensolche Löcher 36 auch in die dahinterliegende Befestigungsfläche 24 gebohrt, sofern diese nicht schon vorhanden sind. Danach wird das Kennzeichenschild 14 von oben nach unten vor dem vorderen Gleitblech 10 in die Randfassungen 16 des unteren Halteblechelementes 18 hineingeschoben und zuletzt das obere Halteblechelement 20 ebenfalls von oben nach unten in den Spalt zwischen dem vorderen Gleitblech 10 und der Befestigungsfläche 24 eingeschoben, bis die am oberen Halteblechelement 20 angebrachten Zapfen 32 unter der Federspannung des beim Einschieben durch die Zapfen 32 elastisch vorgebogenen Gleitbleches 10 in die für die Aufnahme der Zapfen 32 vorgesehenen Rundlöchern 34, 36 einrasten, so daß das obere Halteblechelement 20 beidseits der Aussparung 28 am unteren Halteblechelement 18 aufsitzt und damit das Kennzeichenschild 14 rundum von den Randfassungen 16 umfaßt und umklammert wird. Wegen der zweiseitigen Verrastung der Zapfen 32 sowohl mit dem Gleitblech 10 als auch mit dem Karosserieblech 24 ist die Verbindung zwischen den Halteblechelementen 18, 20 außerordentlich sicher.

Wenn sich die Befestigungsfläche 24 für das Kennzeichenschild 14 in einer dafür vorgesehenen Vertiefung der Karosserie befindet oder wenn der Platz oberhalb der Befestigungsfläche 24 durch eine Kennzeichenschild-Beleuchtungsanlage oder sonstwie begrenzt wird, kann die Montage in leicht abgewandelter Weise vorgenommen werden. Das Kennzeichenschild 14 und möglicherweise auch das obere Halteblechelement 20 lassen sich in derartigen Fällen nicht mehr unbehindert von oben nach unten in bzw. an das untere Halteblechelement 18 schieben, nachdem der aus vorderem Gleitblech 10 und unterem Halteblechelement 18 bestehende Teil der Halterung bereits mit der Befestigungsfläche 24 verschraubt ist. Vielmehr muß das obere Halteblechelement 20 vor der festen Verschraubung bereits ein Stück weit hinter das vordere Gleitblech 10 geschoben werden, aber nur so weit, daß die lichte Weite zwischen den waagerechten Randfassungen 16 die Höhe des Kennzeichenschildes 14 noch knapp überschreitet. Erst in dieser Position wird die Halterung fest auf der Befestigungsfläche 24 verschraubt. Anschließend ist das Kennzeichenschild 14 mit den Händen an seinen kurzen Seiten zu erfassen und ein wenig zusammenzudrücken, so daß in Richtung seiner Beschriftungsseite eine leichte Aufwölbung und damit eine Verkürzung entsteht, die sein Einführen in die seitlichen Randfassungen 16 der Halteblechelemente 18 und 20 ermöglicht. Daraufhin kann das Kennzeichenschild 14 in die untere Randfassung 16 eingeschoben und das obere Halteblechelement 20, unter Umfassung des oberen Randes des vorderen Gleitbleches 10 und des Kennzeichenschildes 14, in Schlußstellung gedrückt werden, wo es durch Einrasten der Zapfen 32 arretiert wird.

Wenn das Kennzeichenschild 14 durch eine hierzu berechtigte Person - etwa anläßlich einer Ab- oder Ummeldung des Fahrzeuges - von der Befestigungsfläche 24 bzw. aus der Halterung entfernt werden soll, so ist es unter Schonung der wiederverwendbaren Halterung erforderlich, daß zunächst die Köpfe der Befestigungsschrauben 22 präzise freigelegt werden. Hierzu eignet sich beispielsweise ein Kreiselfräser passender Größe. Anschließend können die Schrauben gelöst und die gesamte Halterung von der Befestigungsfläche 24 abgenommen werden. Nach Abziehen des oberen Halteblechelementes 20 von den übrigen Bestandteilen der Halterung kann das durch die Auffräsungen unbrauchbar gewordene Kennzeichenschild 14 aus den übrigen Randfassungen 16 entnommen werden. Auf diese Weise bleibt die Halterung wiederverwendbar.

### 2. Ausführungsbeispiel

Die zweite an dieser Stelle beschriebene Ausführungsvariante der Erfindung, welche auch für kürzere und/oder höhere Zeichenschilder geeignet ist, die sich nicht so leicht biegen lassen, aber ebenfalls in einer Einsenkung, z. B. eines Karosseriebleches, montiert werden sollen, wird anhand der Fig. 4 bis 7 illustriert und enthält neben dem vorderen Gleitblech 10 zusätzlich ein hinteres Gleitblech 12, welches sich im montierten Zustand der Zeichenschildhalterung zwischen der Befestigungsfläche 24 und den Rückseiten des unteren Halteblechelementes 18 und des oberen Halteblechelementes 20 befindet und damit nicht von den Randfassungen 16 mitumfaßt wird. Das zusätzliche hintere Gleitblech 12 soll, unabhängig von der Stabilität der Befestigungsfläche 24, auf jeden Fall einen etwaigen Stabilitätsverlust ausgleichen, der dadurch eintreten kann, daß beim vorliegenden Ausführungsbeispiel die Köpfe der Befestigungsschrauben 22 das vordere Gleitblech 10 nicht mit erfassen. Zugleich vermag das hintere Gleitblech 12 auch die Funktion der Befestigungsfläche 24 insoweit zu übernehmen, als diese im ersten Ausführungsbeispiel die für die nach hinten hervorragenden Zapfen 32 bestimmten Rundlöcher 36 enthält. Das Vorhandensein des hinteren Gleitbleches 12 bietet darüberhinaus Vorteile, wenn die Befestigungsfläche 24 nicht vollkommen ebenflächig ist.

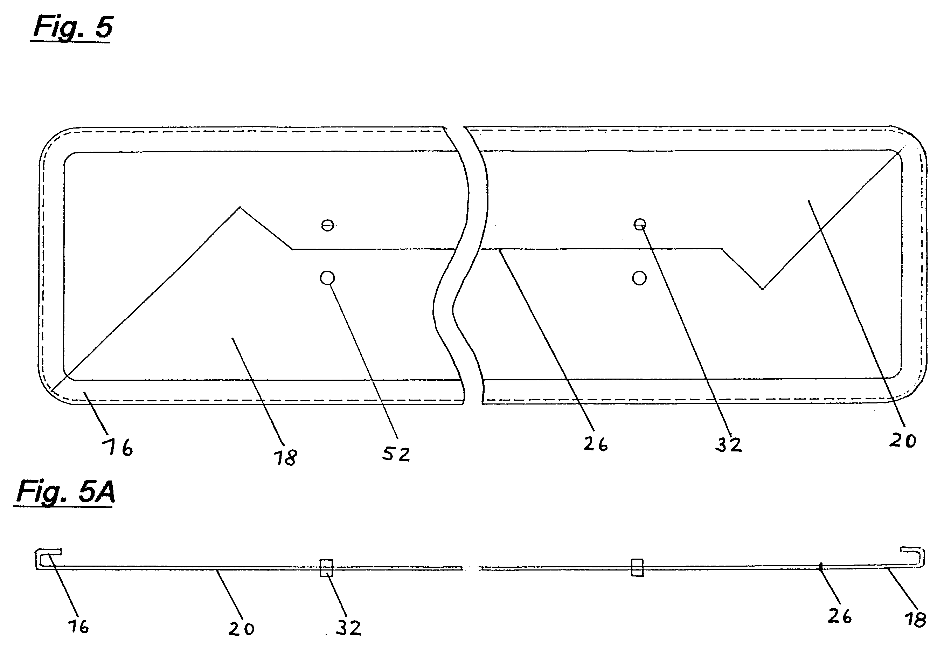

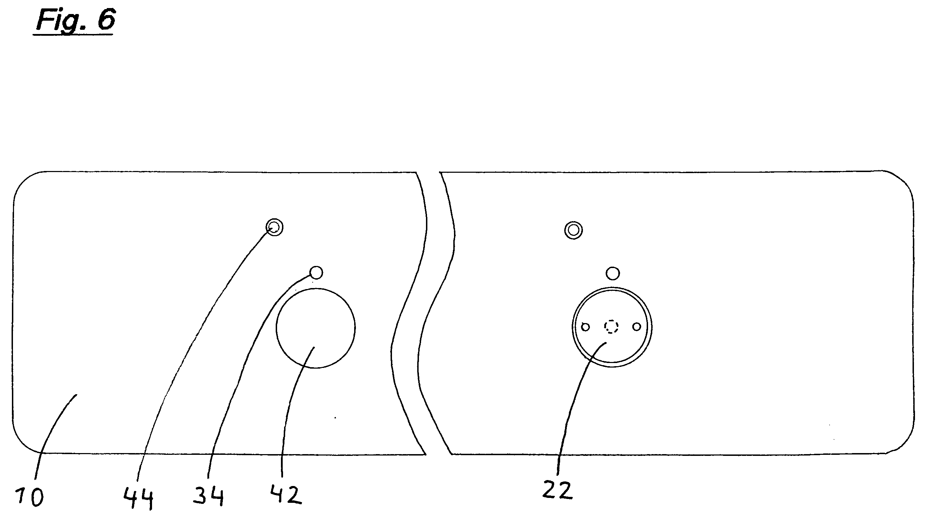

In Fig. 6 ist erkennbar, daß das vordere Gleitblech 10 im Gegensatz zur zuvor beschriebenen Ausführungsvariante plan gearbeitet ist und keine Einsenkung besitzt. Dementsprechend fehlt auch eine hierzu passende Aussparung 28 in den zum Halteblech 18, 20 zusammengeschobenen Halteblechelementen 18, 20 (vgl. Fig. 5). Stattdessen sind zwei kreisförmige Aussparungen 42 vorhanden, deren Durchmesser dem Durchmesser der Köpfe der Befestigungsschrauben 22 entspricht. Oberhalb der kreisförmigen Aussparungen 42 befinden sich wiederum die beiden für die nach vorne hervorragenden Zapfen 32 bestimmten Rundlöcher 34. Oberhalb derselben und schräg zu diesen versetzt enthält das vordere Gleitblech 10 noch zwei muldenförmige Vertiefungen 44, welche die weiter unten beschriebene Montage erleichtern.

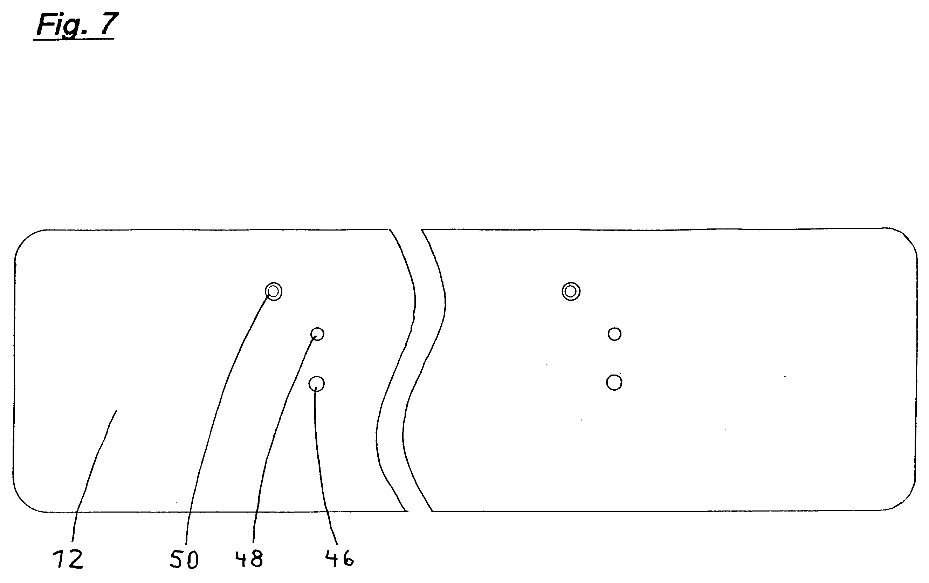

Das in Fig. 7 gezeigte hintere Gleitblech 12 besitzt ein ähnliches Aussehen wie das vordere Gleitblech 10, seine Oberfläche ist ebenfalls flach und glatt. Im gewählten Ausführungsbeispiel sind die beiden Gleitbleche 10, 12, was ihre Außenabmessungen anbetrifft, deckungsgleich. Das hintere Gleitblech 12 kann aber auch etwas größer als das vordere sein. Deckungsgleich mit den kreisförmigen Aussparungen 42 des vorderen Gleitbleches 10 enthält das hintere Gleitblech 12 zwei Bohrungen 46 für die Gewindeteile der Befestigungsschrauben 22. Ebenso wie im vorderen Gleitblech 10 sind an gleicher Stelle zwei Rundlöcher 48 und zwei muldenförmige Vertiefungen 50 vorhanden. Es kann auch genügen, nur in einem der Gleitbleche 10, 12 muldenförmige Vertiefungen vorzusehen.

Fig. 5 zeigt, daß auch das Halteblech 18, 20 der zweiten Ausführungsvariante entlang einer Trennlinie 26 in ein oberes Halteblechelement 20 und ein unteres Halteblechelement 18 unterteilt ist. Das untere Halteblechelement 18 weist zwei Bohrungen 52 für die Gewindeteile der Befestigungsschrauben 22 auf und bildet wiederum mit dem vorderen Gleitblech 10, mit dem es vernietet oder punktverschweißt ist ist, eine Einheit, die auch aus einem einzigen Blech geformt sein könnte.

Im Vergleich zum ersten Ausführungsbeispiel nimmt die Trennlinie 26 einen anderen, lediglich in der Mitte waagerechten Verlauf. Links des waagerechten mittleren Trennlinienabschnittes verläuft die Trennlinie 26 zunächst ein kurzes Stück annähernd linksdiagonal nach oben und anschließend ein längeres Stück annähernd rechtsdiagonal nach unten, und zwar so, daß die Trennlinie 26 die linke untere Ecke des montierten Haltebleches durchläuft. Der rechts des waagerechten Mittelabschnittes verlaufende Trennlinienabschnitt entspricht mit umgekehrter Verlaufsrichtung dem an einer gedachten Verlängerung des waagerechten Trennlinienabschnittes gespiegelten linken Trennlinienabschnitt, so daß die Trennlinie 26 auf der rechten Seite die obere Ecke des montierten Haltebleches durchläuft. Dadurch ergibt sich beim Aneinanderlegen des oberen Halteblechelementes 20 an das untere Halteblechelement 18 eine gewisse Verzahnung der beiden Elemente 18, 20, welche im montierten Zustand eine seitliche Verschiebung unmöglich macht.

Der Montagevorgang weicht in einigen Details von demjenigen des ersten Ausführungsbeispieles ab. Er läßt sich grob in zwei Phasen einteilen.

Zu Beginn der ersten Phase werden das hintere Gleitblech 12 und die aus unterem Halteblechelement 18 und vorderem Gleitblech 10 gebildete Einheit in ihre endgültige Lage zueinander gebracht und mittels der beiden Befestigungsschrauben 22 lose an der Befestigungsfläche 24 des Fahrzeugs angeschraubt, und zwar vorzugsweise so, daß sich die beiden Gleitbleche 10, 12 je nach ihrem Größenverhältnis entweder decken oder, daß ihre Kanten rundum im gleichen Abstand parallel zueinander verlaufen, wenn das hintere Gleitblech 12 größer als das vorder Gleitblech 10 ist. Selbstverständlich können die beiden Gleitbleche auch ganz unterschiedliche Formen haben.

Durch die mittels der beiden Befestigungsschrauben 22 hergestellte Verbindung der beiden Gleitbleche 10, 12, welche in Parallelstellung ihrer Flächen zueinander das untere Halteblechelement 18 einschließen, wird zwischen den Gleitblechen 10, 12 und oberhalb des unteren Halteblechelementes 18 ein flacher Zwischenraum gebildet, welcher so weit auseinanderklafft, wie das untere Halteblechelement 18 dick ist. In diesen Zwischenraum wird das obere Halteblechelement 20, von oben links kommend, nach unten eingeschoben, wobei die beiden Gleitbleche 10, 12 durch die am oberen Halteblechelement 20 angebrachten Zapfen 32 elastisch auseinandergedrückt werden. Das obere Halteblechelement 20 wird allerdings nur teilweise eingeschoben, und zwar nur so weit, bis die Zapfen 32 vorübergehend in die dafür vorgesehenen muldenförmigen Vertiefungen 44, 50 im vorderen Gleitblech 10 und/oder im hinteren Gleitblech 12 eingreifen.

Durch den speziellen Verlauf der Trennlinie 26 ist der Weg des einzuschiebenden oberen Halteblechelementes 20 so steuerbar, daß die Zapfen 32 vor ihrem Einrasten in die Rundlöcher 34, 48 zwangsweise die muldenförmigen Vertiefungen 44, 50 passieren. Wenn nämlich das oberen Halteblechelement 20 aus einer oberhalb des unteren Haltenblechelementes 18 liegenden und links zu diesem versetzten Position zunächst nach unten geführt wird, so stoßen die beiden durch den Verlauf der Trennlinie 26 gebildeten Spitzen jeweils auf dem gegenüberliegenden waagerechten Randabschnitt des betreffenden Halteblechelementes 18 bzw. 20 auf. Nun braucht das obere Halteblechelement 20 nurmehr seitwärts solange nach rechts geschoben zu werden, bis die Zapfen 32 die muldenförmigen Vertiefungen 44, 50 erreicht haben. In der so erreichten Stellung befindet sich zwischen den beiden Halteblechelementen 18, 20 bis zum Erreichen der endgültigen Schlußstellung - bewirkt durch die entsprechend gewählte Lage der Mulden - sowohl in waagerechter als auch in senkrechter Richtung noch eine Wegstrecke, die etwa der zweifachen Breite einer Randfassung 16 entspricht. Die von den Randfassungen 16 begrenzte Fläche ist dadurch etwas größer oder fast gleich der Fläche des Kennzeichenschildes 14. Dieselbe Lage der Teile der Halterung kann auch vor dem Anschrauben an die Karosserie hergestellt werden

Im Anschluß werden die noch freiliegenden Befestigungsschrauben 22 fest angezogen.

In der nun folgenden zweiten Montagephase kann das Kennzeichenschild 14 frontal und ungekrümmt - die seitlichen und die horizontalen Randfassungen 16 der beiden Halteblechelemente 18, 20 sind in diesem Montagestadium noch ausreichend voneinander entfernt - zwischen die Randfassungen 16 der Halteblechelemente 18 und 20 eingeführt werden. Daraufhin wird das obere Halteblechelement 20 aus den muldenförmigen Vertiefungen 44, 50 heraus weiter schräg nach unten gedrückt, bis beide Halteblechelemente 18, 20 miteinander verzahnt längs der Trennlinie aneinander anliegen und die Randfassungen 16 das Kennzeichenschild 14 ringsum und abstandslos umfassen. Sobald die Schlußstellung erreicht ist, rasten die Zapfen 32 des oberen Halteblechelementes 20 hörbar in die hierfür vor gesehenen Rundlöcher 34 im vorderen Gleitblech 10 und in die Rundlöcher 48 im hinteren Gleitblech 12 ein.

Wenn die Länge der nach hinten ragenden Zapfen 32 die Stärke des hinteren Gleitbleches 12 übertrifft, können diese Zapfen 32 überdies auch noch in zuvor an der Befestigungsfläche 24 anzubringende Löcher oder Vertiefungen einrasten, wodurch die Halterung in vorteilhafter Weise eine zusätzliche Verankerung erfährt.

Die Demontage des Zeichenschildes erfolgt analog zum ersten Ausführungsbeispiel.

Es versteht sich, daß das anhand von zwei Ausführungsbeispielen beschriebene Prinzip der diebstahlsicheren Befestigung und Halterung von Zeichenschildern auch in davon abweichenden Ausführungsvarianten verwirklicht sein kann. Das betrifft sowohl die Kombination von speziellen Merkmalsausprägungen im ersten Ausführungsbeispiel mit speziellen Ausführungen anderer Merkmale des zweiten Ausführungsbeispieles und umgekehrt, soweit dies technisch sinnvoll ist. Darüberhinaus könnte beispielsweise auch etwa die Anzahl der Halteblechelemente erhöht werden, oder die Befestigungsmittel 32 könnten als federnde Spangen oder Ähnliches ausgebildet sein.

Ebenso versteht sich, daß der erfinderische Gedanke nicht allein die Befestigung rechteckiger Zeichenschilder betrifft, sondern ohne weiteres auch auf quadratische, runde, ovale oder polygonale Zeichenschilder anwendbar ist. Die sinngemäße Anwendung der Erfindung zur Diebstahlsicherung anderer Zeichenschilder, wie etwa der von Verkehrsschildern, ordert gegebenenfalls die Bereitstellung einer geeigneten Befestigungsfläche, die dem Karosserieblech oder sonstigen Halterungsunterlagen beieinem Kraftfahrzeug entspricht.

## Patentansprüche

1. Halterung zur diebstahlsicheren Befestigung eines flächigen Zeichenschildes (14), insbesondere eines Kfz-Kennzeichenschildes, auf einer Befestigungsfläche (24), bestehend aus Halteblechelementen (10, 18, 20) mit Randfassungen (16), welche die Ränder des Zeichenschildes (14) im montierten Zustand allseitig umfassen, wobei ein erstes Halteblechelement (10, 18) durch lösbare Befestigungselemente (22) mit Kopf auf der Befestigungsfläche (24) festlegbar ist, wenigstens ein weiteres Halteblechelement (20) durch zusammenwirkende Rastglieder (32, 34) mit dem ersten Halteblechelement (10, 18) in Eingriff zu bringen ist und sowohl die Befestigungselemente (22) als auch die Rastglieder (32, 34) im fertig montierten Zustand vom Zeichenschild (14) überdeckt sind, **dadurch gekennzeichnet,** daß die Schlüsselweite des Kopfes der Befestigungselemente (22) weit überdimensioniert ist und das weitere Halteblechelement (20) zwischen die Befestigungsfläche (24) und das erste Halteblechelement (10, 18) einschiebbar und durch zusammenwirkende Rastglieder (32, 34) auch mit der Befestigungsfläche (24) und/oder einem zwischen dieser und den Halteblechelementen (10, 18, 20) befestigten, unteren Gleitblech (12) in Eingriff zu bringen ist.

2. Halterung nach Anspruch 1, **dadurch gekennzeichnet,** daß die Halteblechelemente (10, 18, 20) im miteinander verbundenen Zustand zusammen eine längliche rechteckige Form mit einer sich in Längsrichtung erstreckenden Trennlinie (26) haben.

3. Halterung nach Anspruch 1, **dadurch gekennzeichnet,** daß die Halteblechelemente (10. 18, 20) im miteinander verbundenen Zustand zusammen eine rechteckige Form mit einer sich zwischen diagonal gegenüberliegenden Ecken erstreckenden Trennlinie haben.

4. Halterung nach Anspruch 3, **dadurch gekennzeichnet,** daß das erste Halteblechlement (10, 18) und/oder die Befestigungsfläche (24) oder das untere Gleitblech (12) muldenförmige Vertiefungen (44, 50) aufweisen, die im Zusammenwirken mit den am weiteren Halteblechelement (20) angebrachten Rastgliedern (32) eine Relativstellung der Halteblechelemente (10, 18, 20) definieren, in welcher die innere Kante der Randfassungen (16) den äußeren Umriß des Zeichenschildes (14) mit geringem Spiel umgibt.

5. Halterung nach einem der Ansprüche 1 bis 4, **dadurch gekennzeichnet**, daß das erste Halteblechelement (10, 18) aus zwei flach aufeinanderliegenden und fest miteinander verbundenen Blechen besteht, von denen das hintere mit der Randfassung (16) für das Zeichenschild (14) und das vordere mit den Rastgliedern (34) versehen ist.

6. Halterung nach Anspruch 5, **dadurch gekennzeichnet**, daß das vordere Blech (10) etwa denselben Umriß wie das Zeichenschild (14) hat.

7. Halterung nach einem der Ansprüche 1 bis 6, **dadurch gekennzeichnet**, daß das erste Halteblechelement (10, 18) aus einem einzigen, stufenförmig abgesetzten Blechteil besteht, dessen hinterer Teil mit der Randfassung (16) für das Zeichenschild (14) und dessen vorderer Teil mit den Rastgliedern (34) versehen ist.

8. Halterung nach einem der Ansprüche 1 bis 7, **dadurch gekennzeichnet**, daß die Köpfe der Befestigungselemente (22) ganz oder teilweise in eine Vertiefung (38, 42) des ersten Halteblechelementes (10, 18) einsenkbar sind.

9. Halterung nach einem der Ansprüche 1 bis 8, **dadurch gekennzeichnet**, daß die zusammenwirkenden Rastglieder am weiteren Halteblechelement (20) angebrachte Zapfen (32) und entsprechende Aussparungen oder Löcher (34, 36, 48) im ersten Halteblechelement (10, 18) und in der Befestigungsfläche (24) und/oder im unteren Gleitblech (12) sind.

10. Halterung nach Anspruch 9, **dadurch gekennzeichnet**, daß die Befestigungselemente (22) Schrauben oder Muttern sind, deren Kopfdurchmesser wenigstens das Dreifache, vorzugsweise etwa das Fünffache des Gewindedurchmessers der Befestigungsschrauben (22) beträgt.
